# FASCICULE DE BREVET EUROPEEN

(11) **EP 4 577 419 B1**
(45) Date de publication et mention de la délivrance du brevet: **29.07.2026**
(21) Numéro de dépôt: 23745620.7
(22) Date de dépôt: 23.06.2023
(51) Int. Cl.: B60H 1/00, H01M 10/00, B60K 1/00

(54) **MODULE HYDRAULIQUE DE GESTION THERMIQUE POUR CIRCUIT DE REFROIDISSEMENT DE VEHICULE ELECTRIQUE, CIRCUIT DE REFROIDISSEMENT ET VEHICULE ELECTRIQUE COMPORTANT UN TEL MODULE HYDRAULIQUE**
HYDRAULISCHES WÄRMEMANAGEMENTMODUL FÜR EINEN KÜHLKREISLAUF EINES ELEKTROFAHRZEUGS, KÜHLKREISLAUF UND ELEKTROFAHRZEUG MIT SOLCH EINEM HYDRAULISCHEN MODUL
HYDRAULIC THERMAL MANAGEMENT MODULE FOR A COOLING CIRCUIT OF AN ELECTRIC VEHICLE, COOLING CIRCUIT, AND ELECTRIC VEHICLE COMPRISING SUCH A HYDRAULIC MODULE

(30) Priorité: 26.08.2022 FR 2208555
(43) Date de publication de la demande: 02.07.2025
(73) Titulaire: Stellantis Auto SAS, 78300 Poissy (FR)
(72) Inventeur: SEIGNER, Maxime, 90500 BEAUCOURT (FR)
(74) Mandataire: PSIP
(86) Numéro de dépôt international: PCT/FR2023/050956
(87) Numéro de publication internationale: WO 2024/042275

(56) Documents cités:
- EP-A2- 3 925 814
- CN-A- 114 056 035
- US-A1- 2015 258 875
- US-B2- 11 192 425

## Description

L'invention porte sur le domaine des circuits de refroidissement des véhicules électriques. Plus précisément, l'invention a trait à un module hydraulique de gestion thermique pour des circuits de refroidissement de véhicules électriques et à un véhicule comportant un tel module hydraulique de gestion thermique.

Aujourd'hui, les technologies mises en œuvre dans les circuits de refroidissement de véhicules électriques imposent de développer une solution dédiée pour chaque véhicule électrique respectif.

Afin de limiter les coûts de développement et de restreindre le nombre de composants stockées, il est souhaitable de disposer d'une technologie de refroidissement transversale, c'est-à-dire transposable d'un modèle de véhicule électrique à un autre.

En outre, l'état de la technique est connu du document EP3925814A2.

L'invention vise ainsi à proposer un module hydraulique de gestion thermique d'utilisation transversale, c'est-à-dire aisément transposable d'un circuit de refroidissement à un autre, et donc d'un véhicule électrique à un autre. L'invention propose également un circuit de refroidissement pour véhicule électrique, ainsi qu'un véhicule électrique, qui soient pourvus d'un tel module hydraulique de gestion thermique. L'invention propose encore un procédé d'utilisation d'un tel circuit de refroidissement.

Pour atteindre cet objectif, l'invention propose ainsi un module hydraulique de gestion thermique pour circuit de refroidissement de véhicule électrique comportant une première pompe hydraulique et une deuxième pompe hydraulique, dix interfaces formant voies de communication de fluide.

Dans ce module hydraulique de gestion thermique :
- une première interface est connectée en communication de fluide à une entrée de la première pompe hydraulique, une sortie de la première pompe hydraulique est connectée en communication de fluide à une deuxième interface ;
- une troisième interface est connectée en communication de fluide à une entrée de la deuxième pompe hydraulique, une sortie de la deuxième pompe hydraulique est connectée en communication de fluide à une quatrième interface ; et :
   - une cinquième interface, une sixième interface, une septième interface, une huitième interface, une neuvième interface, une dixième interface étant en outre définies parmi les dix interfaces ;
   - au moins la cinquième interface, la septième interface, la huitième interface, la neuvième interface et la dixième interface étant individuellement actionnables en ouverture et en fermeture.

En outre, le module hydraulique de gestion thermique admet quatre configurations de pilotage, dans lesquelles :
- dans une première configuration de pilotage :
   - la cinquième interface, la septième interface et la huitième interface sont ouvertes ;
   - la neuvième interface et la dixième interface sont fermées ;
   - la cinquième interface est en communication de fluide avec l'entrée de la deuxième pompe hydraulique ;
   - la sixième interface est connectée en communication de fluide à la septième interface ;
   - la huitième interface est également connectée en communication de fluide à l'entrée de la première pompe hydraulique ;
   - dans une deuxième configuration de pilotage :
      - la huitième interface est ouverte ;
      - la cinquième interface, la septième interface sont fermées, la neuvième interface et la dixième interface sont fermées ;
      - la sixième interface est connectée en communication de fluide à l'entrée de la deuxième pompe hydraulique ;
      - la huitième interface est connectée en communication de fluide à l'entrée de la première pompe hydraulique ;
      - dans une troisième configuration de pilotage :
      - la cinquième interface, la septième interface sont fermées, la neuvième interface et la dixième interface sont ouvertes ;
      - la huitième interface est fermée ;
      - la cinquième interface est ouverte et en communication de fluide avec l'entrée de la deuxième pompe hydraulique ;
      - la sixième interface est connectée en communication de fluide à la septième interface ;
      - la neuvième interface est en communication de fluide avec la dixième interface ;
      - dans une quatrième configuration de pilotage :
         - la neuvième interface et la dixième interface sont ouvertes ;
         - la cinquième interface, la septième interface et la huitième interface sont fermées ;
         - la sixième interface est connectée en communication de fluide à l'entrée de la deuxième pompe hydraulique ;
         - la neuvième interface est en communication de fluide avec la dixième interface.

Grâce à ses quatre configurations de pilotage, le module hydraulique de gestion thermique offre ainsi une solution transversale permettant à la fois de limiter les coûts (développement, stockage, gestion) et la diversité des circuits de refroidissement pour véhicules électriques.

Avantageusement, dans le module hydraulique de gestion thermique, la première interface, la deuxième interface, la troisième interface, la quatrième interface et la sixième interface sont toutes ouvertes dans chacune des première, deuxième, troisième et quatrième configurations de pilotage.

Ce module hydraulique de gestion thermique peut être réemployé à l'identique sur une large gamme de circuits de refroidissement et/ou de véhicules électriques. Ses différentes configurations permettent un réglage en fonction des besoins thermiques du système dans lequel il est mis en œuvre.

Avantageusement, dans le module hydraulique de gestion thermique, la cinquième interface est connectée en communication de fluide à une onzième interface.

L'invention porte également sur un circuit de refroidissement de véhicule électrique, comportant un module hydraulique de gestion thermique tel que décrit ci-dessus.

Avantageusement, dans le circuit de refroidissement précité de véhicule électrique :
- la première interface, la deuxième interface, la huitième interface, la neuvième interface, la dixième interface et la première pompe hydraulique peuvent appartenir à un premier sous-circuit de refroidissement dudit circuit de refroidissement ;
- la troisième interface, la quatrième interface, la cinquième interface, la sixième interface, la septième interface et la deuxième pompe hydraulique peuvent appartenir à un deuxième sous-circuit de refroidissement dudit circuit de refroidissement.

L'invention porte encore sur un procédé d'utilisation du circuit de refroidissement précité de véhicule électrique, dans lequel de l'eau glycolée est utilisée dans le premier sous-circuit de refroidissement dudit circuit de refroidissement, et un liquide diélectrique ou de l'eau glycolée est utilisé(e) dans le deuxième sous-circuit de refroidissement dudit circuit de refroidissement.

Il est ainsi possible d'utiliser le module hydraulique de gestion thermique précité à la fois avec une combinaison d'eau glycolée dans un premier sous-circuit de refroidissement et de liquide diélectrique dans un deuxième circuit de refroidissement, soit avec de l'eau glycolée dans chacun des deux sous-circuits de refroidissement intégrant le module hydraulique de gestion thermique.

L'invention porte encore sur un véhicule électrique comportant le module hydraulique de gestion thermique précité ou un circuit de refroidissement présentant le module hydraulique de gestion thermique précité.

L'invention sera davantage détaillée par la description de modes de réalisation non limitatifs, et sur la base des figures annexées illustrant des variantes de l'invention, dans lesquelles :
- [Fig. 1] illustre schématiquement un module hydraulique de gestion thermique dans une première configuration de pilotage ;
- [Fig. 2] illustre schématiquement le module hydraulique de gestion thermique de la Fig. 1 dans une deuxième configuration de pilotage ;
- [Fig. 3] illustre schématiquement le module hydraulique de gestion thermique de la Fig. 1 dans une troisième configuration de pilotage ;
- [Fig. 4] illustre schématiquement le module hydraulique de gestion thermique de la Fig. 1 dans une quatrième configuration de pilotage.

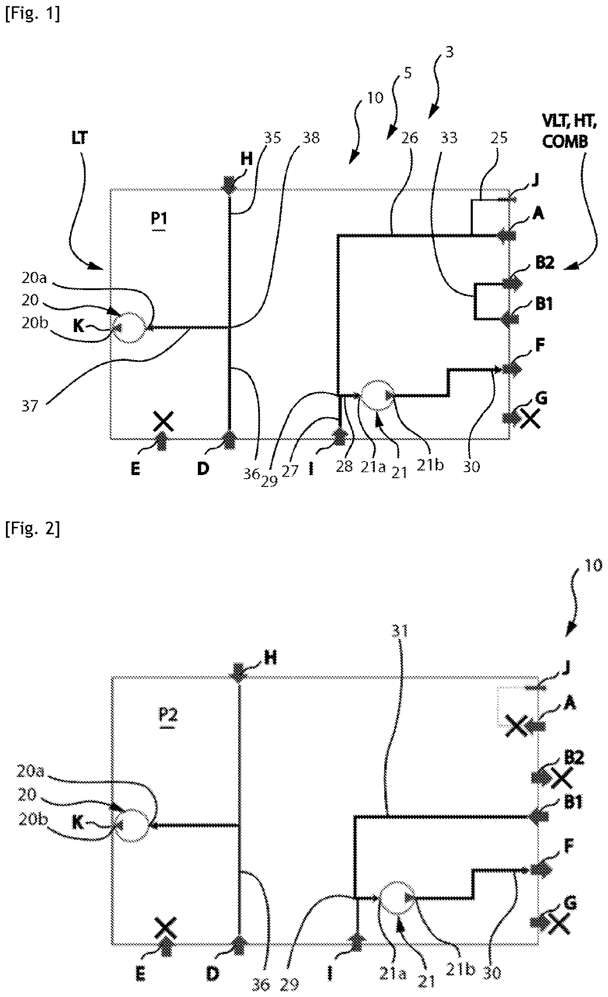

Un module hydraulique de gestion thermique 10 pour circuit de refroidissement 5 de véhicule électrique 3 est illustré en Fig. 1 à 4.

Le module hydraulique de gestion thermique 10 comporte une première pompe hydraulique 20 et une deuxième pompe hydraulique 21, ainsi que onze interfaces A, B1, B2, D, E, F, G, H, I, J, K formant chacune une voie de communication de fluide.

Dans le module hydraulique de gestion thermique 10, une première interface H est connectée en communication de fluide à une entrée 20a de la première pompe hydraulique 20, une sortie 20b de la première pompe hydraulique 20 est connectée en communication de fluide à une deuxième interface K.

Par ailleurs, une troisième interface I est connectée en communication de fluide à une entrée 21a de la deuxième pompe hydraulique 21, une sortie 21b de la deuxième pompe hydraulique 21 est connectée en communication de fluide à une quatrième interface F.

En outre, une cinquième interface A, une sixième interface B1, une septième interface B2, une huitième interface D, une neuvième interface E, une dixième interface G et une onzième interface J sont définies parmi les onze interfaces A, B1, B2, D, E, F, G, H, I, J, K.

Parmi les onze interfaces A, B1, B2, D, E, F, G, H, I, J, K, au moins la cinquième interface A, la septième interface B2, la huitième interface D, la neuvième interface E et la dixième interface G sont individuellement actionnables en ouverture et en fermeture.

Le module hydraulique de gestion thermique 10 admet quatre configurations de pilotage P1, P2, P3 et P4, illustrées respectivement individuellement aux Fig. 1 à 4.

Dans la première configuration de pilotage P1 (Fig. 1) :
- la cinquième interface A, la septième interface B2 et la huitième interface D sont ouvertes ;
- la neuvième interface E et la dixième interface G sont fermées ;
- la cinquième interface A est en communication de fluide avec l'entrée 21a de la deuxième pompe hydraulique 21 ;
- la sixième interface B1 est connectée en communication de fluide à la septième interface B2 ;
- la huitième interface D est également connectée en communication de fluide à l'entrée 20a de la première pompe hydraulique 20.

Dans la deuxième configuration de pilotage P2 (Fig. 2) :
- la huitième interface D est ouverte ;
- la cinquième interface A, la septième interface B2 sont fermées, la neuvième interface E et la dixième interface G sont fermées ;
- la sixième interface B1 est connectée en communication de fluide à l'entrée 21a de la deuxième pompe hydraulique 21 ;
- la huitième interface D est connectée en communication de fluide à l'entrée 20a de la première pompe hydraulique 20.

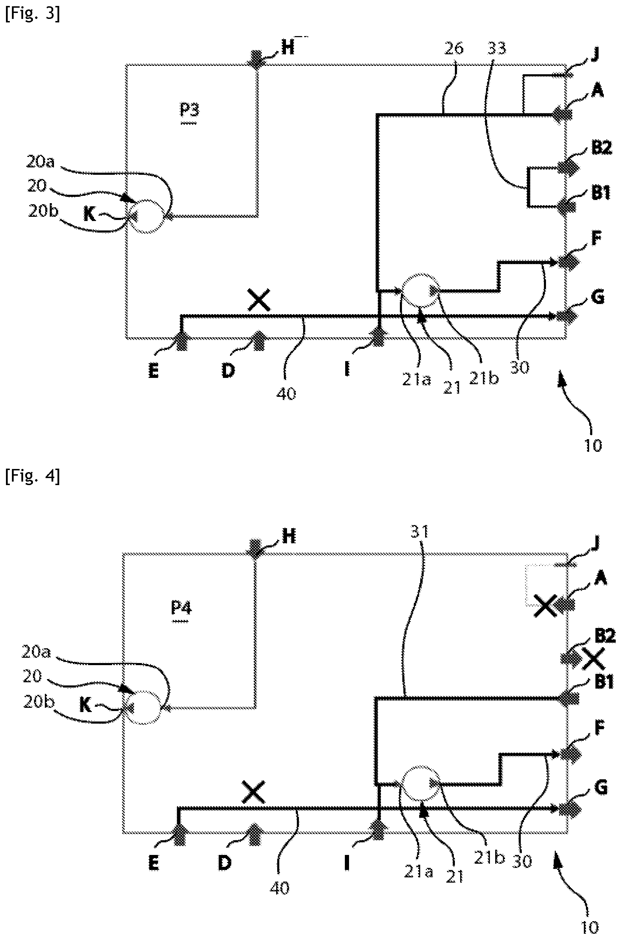

Dans la troisième configuration de pilotage P3 (Fig. 3) :
- la cinquième interface A, la septième interface B2 sont fermées, la neuvième interface E et la dixième interface G sont ouvertes ;
- la huitième interface D est fermée ;
- la cinquième interface A est ouverte et en communication de fluide avec l'entrée 21a de la deuxième pompe hydraulique 21 ;
- la sixième interface B1 est connectée en communication de fluide à la septième interface B2 ;
- la neuvième interface E et la dixième interface G sont ouvertes, et, la neuvième interface E est en communication de fluide avec la dixième interface G.

Dans la quatrième configuration de pilotage P4 (Fig. 4) :
- la neuvième interface E et la dixième interface G sont ouvertes ;
- la cinquième interface A, la septième interface B2 et la huitième interface D sont fermées ;
- la sixième interface B1 est connectée en communication de fluide à l'entrée 21a de la deuxième pompe hydraulique 21 ;
- la neuvième interface E et la dixième interface G sont ouvertes, et, la neuvième interface E est en communication de fluide avec la dixième interface G.

Dans le module hydraulique de gestion thermique 10, la première interface H, la deuxième interface K, la troisième interface I, la quatrième interface F et la sixième interface B1 sont de préférence toutes ouvertes dans chacune des première, deuxième, troisième et quatrième configurations de pilotage P1, P2, P3, P4.

Dans le module hydraulique de gestion thermique 10 décrit ci-dessus, de préférence, la cinquième interface A est connectée en communication de fluide à la onzième interface J. De préférence, la onzième interface J est également ouverte dans chacune des première à quatrième configurations de pilotage P1 à P4. La onzième interface J peut par exemple être configurée pour être reliée à une boîte de dégazage (non illustrée).

Le module hydraulique de gestion thermique 10 décrit ci-dessus est également particulièrement adapté pour une mise en œuvre dans le circuit de refroidissement 5 précité du véhicule électrique 3.

Comme illustré en Fig. 1, dans le circuit de refroidissement 5 du véhicule électrique 3 :
- la première interface H, la deuxième interface K, la huitième interface D, la neuvième interface E, la dixième interface G et la première pompe hydraulique 20 appartiennent à un premier sous-circuit de refroidissement LT dudit circuit de refroidissement 5 ;
- la troisième interface I, la quatrième interface F, la cinquième interface A, la sixième interface B1, la septième interface B2 et la deuxième pompe hydraulique 21 appartiennent à un deuxième sous-circuit de refroidissement VLT, LT, COMB dudit circuit de refroidissement 5.

Selon un procédé d'utilisation du circuit de refroidissement 5 du véhicule électrique 3, de l'eau glycolée est utilisée dans le premier sous-circuit de refroidissement LT.

En outre, dans une première variante du procédé d'utilisation, un liquide diélectrique est utilisé dans le deuxième sous-circuit de refroidissement VLT, HT, COMB dudit circuit de refroidissement 5. Dans une deuxième variante du procédé d'utilisation, de l'eau glycolée est utilisée dans le deuxième sous-circuit de refroidissement VLT, LT, COMB dudit circuit de refroidissement 5. Le terme « utilisé » associé au liquide diélectrique ou à l'eau glycolée est à comprendre comme

Le circuit de refroidissement 5 et/ou le véhicule électrique 3 pourront par exemple comporter un ou plusieurs de chaque composant suivant :
- Chargeur,
- Machine électrique avant,
- Machine électrique arrière,
- Echangeur thermique fonctionnant à l'eau glycolée, fluide diélectrique et/ou fluide réfrigérant,
- Sous-circuit de refroidissement de batterie,
- Pompe à chaleur,
- Aérotherme ou dispositif de chauffage d'habitacle,
- Etc.

Un véhicule électrique 3 pourra ainsi avantageusement comporter un module hydraulique de gestion thermique 10 précité ou le circuit de refroidissement 5 précité.

## Revendications

1. Module hydraulique de gestion thermique (10) pour circuit de refroidissement (5) de véhicule électrique (3) comportant une première pompe hydraulique (20) et une deuxième pompe hydraulique (21), dix interfaces (A, B1, B2, D, E, F, G, H, I, K) formant voies de communication de fluide ; dans lequel :
- une première interface (H) est connectée en communication de fluide à une entrée (20a) de la première pompe hydraulique (20), une sortie (20b) de la première pompe hydraulique (20) est connectée en communication de fluide à une deuxième interface (K) ;
- une troisième interface (I) est connectée en communication de fluide à une entrée (21a) de la deuxième pompe hydraulique (21), une sortie (21b) de la deuxième pompe hydraulique (21) est connectée en communication de fluide à une quatrième interface (F) ; et dans lequel :
- une cinquième interface (A), une sixième interface (B1), une septième interface (B2), une huitième interface (D), une neuvième interface (E), une dixième interface (G) étant en outre définies parmi les dix interfaces (A, B1, B2, D, E, F, G, H, I, K) ;
- au moins la cinquième interface (A), la septième interface (B2), la huitième interface (D), la neuvième interface (E) et la dixième interface (G) étant individuellement actionnables en ouverture et en fermeture ;
le module hydraulique de gestion thermique admettant quatre configurations de pilotage, dans lesquelles :
- dans une première configuration de pilotage (P1) :
- la cinquième interface (A), la septième interface (B2) et la huitième interface (D) sont ouvertes ;
- la neuvième interface (E) et la dixième interface (G) sont fermées ;
- la cinquième interface (A) est en communication de fluide avec l'entrée (21a) de la deuxième pompe hydraulique (21) ;
- la sixième interface (B1) est connectée en communication de fluide à la septième interface (B2) ;
- la huitième interface (D) est également connectée en communication de fluide à l'entrée (20a) de la première pompe hydraulique (20) ;
- dans une deuxième configuration de pilotage (P2) :
- la huitième interface (D) est ouverte ;
- la cinquième interface (A), la septième interface (B2) sont fermées, la neuvième interface (E) et la dixième interface (G) sont fermées ;
- la sixième interface (B1) est connectée en communication de fluide à l'entrée (21a) de la deuxième pompe hydraulique (21) ;
- la huitième interface (D) est connectée en communication de fluide à l'entrée (20a) de la première pompe hydraulique (20) ;
- dans une troisième configuration de pilotage (P3) :
- la cinquième interface (A), la septième interface (B2) sont fermées, la neuvième interface (E) et la dixième interface (G) sont ouvertes ;
- la huitième interface (D) est fermée ;
- la cinquième interface (A) est ouverte et en communication de fluide avec l'entrée (21a) de la deuxième pompe hydraulique (21) ;
- la sixième interface (B1) est connectée en communication de fluide à la septième interface (B2) ;
- la neuvième interface (E) est en communication de fluide avec la dixième interface (G) ;
- dans une quatrième configuration de pilotage (P4) :
- la neuvième interface (E) et la dixième interface (G) sont ouvertes ;
- la cinquième interface (A), la septième interface (B2) et la huitième interface (D) sont fermées ;
- la sixième interface (B1) est connectée en communication de fluide à l'entrée (21a) de la deuxième pompe hydraulique (21) ;
- la neuvième interface (E) est en communication de fluide avec la dixième interface (G).

2. Module hydraulique de gestion thermique (10) selon la revendication 1, **caractérisé en ce que** la première interface (H), la deuxième interface (K), la troisième interface (I), la quatrième interface (F) et la sixième interface (B1) sont toutes ouvertes dans chacune des première, deuxième, troisième et quatrième configurations de pilotage (P1, P2, P3, P4).

3. Module hydraulique de gestion thermique (10) selon l'une quelconque des revendications 1 ou 2, **caractérisé en ce que** la cinquième interface (A) est connectée en communication de fluide à une onzième interface (J).

4. Circuit de refroidissement (5) de véhicule électrique (3), comportant un module hydraulique de gestion thermique (10) selon l'une quelconque des revendications 1 à 3.

5. Circuit de refroidissement (5) de véhicule électrique (3) selon la revendication 4, dans lequel :
- la première interface (H), la deuxième interface (K), la huitième interface (D), la neuvième interface (E), la dixième interface (G) et la première pompe hydraulique (20) appartiennent à un premier sous-circuit de refroidissement dudit circuit de refroidissement (5) ;
- la troisième interface (I), la quatrième interface (F), la cinquième interface (A), la sixième interface (B1), la septième interface (B2) et la deuxième pompe hydraulique (21) appartiennent à un deuxième sous-circuit de refroidissement dudit circuit de refroidissement (5).

6. Procédé d'utilisation du circuit de refroidissement (5) de véhicule électrique (3) selon la revendication 5, dans lequel de l'eau glycolée est utilisée dans le premier sous-circuit de refroidissement dudit circuit de refroidissement (5), et un liquide diélectrique ou de l'eau glycolée est utilisé(e) dans le deuxième sous-circuit de refroidissement dudit circuit de refroidissement (5).

7. Véhicule électrique (3) comportant un module hydraulique de gestion thermique (10) selon l'une quelconque des revendications 1 à 3 ou un circuit de refroidissement (5) présentant un module hydraulique de gestion thermique (10) selon l'une quelconque des revendications 1 à 3.

## Patentansprüche

1. Hydraulisches Wärmemanagementmodul (10) für den Kühlkreislauf (5) eines Elektrofahrzeugs (3) mit einer ersten Hydraulikpumpe (20) und einer zweiten Hydraulikpumpe (21), wobei zehn Schnittstellen (A, B1, B2, D, E, F, G, H, I, K) Fluidverbindungswege bilden; wobei:
- Eine erste Schnittstelle (H) ist in Fluidverbindung mit einem Einlass (20a) der ersten Hydraulikpumpe (20) verbunden, ein Auslass (20b) der ersten Hydraulikpumpe (20) ist in Fluidverbindung mit einer zweiten Schnittstelle (K) verbunden;
- Eine dritte Schnittstelle (I) ist in Fluidverbindung mit einem Eingang (21a) der zweiten Hydraulikpumpe (21) verbunden, ein Ausgang (21b) der zweiten Hydraulikpumpe (21) ist in Fluidverbindung mit einer vierten Schnittstelle (F) verbunden, und wobei:
- eine fünfte Schnittstelle (A), eine sechste Schnittstelle (B1), eine siebte Schnittstelle (B2), eine achte Schnittstelle (D), eine neunte Schnittstelle (E), wobei ferner eine zehnte Schnittstelle (G) aus den zehn Schnittstellen (A, B1, B2, D, E, F, G, H, I, K) definiert ist;
- zumindest die fünfte Schnittstelle (A), die siebte Schnittstelle (B2), die achte Schnittstelle (D), die neunte Schnittstelle (E) und die zehnte Schnittstelle (G) sind einzeln beim Öffnen und Schließen betätigbar;
das hydraulische Wärmemanagementmodul,das vier Steuerungskonfigurationen zulässt, bei denen
- in einer ersten Flugsteuerungskonfiguration (P1):
- Die fünfte Schnittstelle (A), die siebte Schnittstelle (B2) und die achte Schnittstelle (D) sind offen.
- Die neunte Schnittstelle (E) und die zehnte Schnittstelle (G) sind geschlossen.
- Die fünfte Schnittstelle (A) steht in Fluidverbindung mit dem Einlass (21a) der zweiten Hydraulikpumpe (21).
- Die sechste Schnittstelle (B1) ist mit der siebten Schnittstelle (B2) in Fluidverbindung verbunden.
- Die achte Schnittstelle (D) ist ebenfalls in Fluidverbindung mit dem Einlass (20a) der ersten Hydraulikpumpe (20) verbunden.
- in einer zweiten Flugsteuerungskonfiguration (P2):
- Die achte Schnittstelle (D) ist offen.
- Die fünfte Schnittstelle (A), die siebte Schnittstelle (B2) sind geschlossen, die neunte Schnittstelle (E) und die zehnte Schnittstelle (G) sind geschlossen.
- Die sechste Schnittstelle (B1) ist in Fluidverbindung mit dem Einlass (21a) der zweiten Hydraulikpumpe (21) verbunden.
- Die achte Schnittstelle (D) ist in Fluidverbindung mit dem Einlass (20a) der ersten Hydraulikpumpe (20) verbunden.
- in einer dritten Flugsteuerungskonfiguration (P3):
- Die fünfte Schnittstelle (A), die siebte Schnittstelle (B2) sind geschlossen, die neunte Schnittstelle (E) und die zehnte Schnittstelle (G) sind geöffnet.
- Die achte Schnittstelle (D) ist geschlossen.
- Die fünfte Schnittstelle (A) ist offen und in Fluidverbindung mit dem Einlass (21a) der zweiten Hydraulikpumpe (21).
- Die sechste Schnittstelle (B1) ist mit der siebten Schnittstelle (B2) in Fluidverbindung verbunden.
- Die neunte Schnittstelle (E) steht in Fluidverbindung mit der zehnten Schnittstelle (G).
- in einer vierten Steuerkonfiguration (P4):
- Die neunte Schnittstelle (E) und die zehnte Schnittstelle (G) sind offen.
- Die fünfte Schnittstelle (A), die siebte Schnittstelle (B2) und die achte Schnittstelle (D) sind geschlossen.
- Die sechste Schnittstelle (B1) ist in Fluidverbindung mit dem Einlass (21a) der zweiten Hydraulikpumpe (21) verbunden.
- Die neunte Schnittstelle (E) steht in Fluidverbindung mit der zehnten Schnittstelle (G).

2. Hydraulisches Wärmemanagementmodul (10) nach Anspruch 1, **dadurch gekennzeichnet, dass** die erste Schnittstelle (H), die zweite Schnittstelle (K), die dritte Schnittstelle (I), die vierte Schnittstelle (F) und die sechste Schnittstelle (B1) alle in jeder der ersten, zweiten, dritten und vierten Steuerkonfigurationen (P1, P2, P3, P4) geöffnet sind.

3. Hydraulisches Wärmemanagementmodul (10) nach einem der Ansprüche 1 oder 2, **dadurch gekennzeichnet, dass** die fünfte Schnittstelle (A) in Fluidverbindung mit einer elften Schnittstelle (J) verbunden ist.

4. Kühlkreislauf (5) für ein Elektrofahrzeug (3), der ein hydraulisches Wärmemanagementmodul (10) nach einem der Ansprüche 1 bis 3 aufweist.

5. Kühlkreislauf (5) für ein Elektrofahrzeug (3) nach Anspruch 4, wobei:
- Die erste Schnittstelle (H), die zweite Schnittstelle (K), die achte Schnittstelle (D), die neunte Schnittstelle (E), die zehnte Schnittstelle (G) und die erste Hydraulikpumpe (20) gehören zu einem ersten Kühlunterkreis des Kühlkreislaufs (5).
- Die dritte Schnittstelle (I), die vierte Schnittstelle (F), die fünfte Schnittstelle (A), die sechste Schnittstelle (B1), die siebte Schnittstelle (B2) und die zweite Hydraulikpumpe (21) gehören zu einem zweiten Kühlteilkreis des Kühlkreislaufs (5).

6. Verfahren zum Betreiben des Kühlkreislaufs (5) eines Elektrofahrzeugs (3) nach Anspruch 5, wobei Glykolwasser in dem ersten Kühlteilkreis des Kühlkreislaufs (5) verwendet wird und eine dielektrische Flüssigkeit oder Glykolwasser in dem zweiten Kühlteilkreis des Kühlkreislaufs (5) verwendet wird.

7. Elektrisches Fahrzeug (3) mit einem hydraulischen Wärmemanagementmodul (10) nach einem der Ansprüche 1 bis 3 oder einem Kühlkreislauf (5) mit einem hydraulischen Wärmemanagementmodul (10) nach einem der Ansprüche 1 bis 3.

## Claims

1. Hydraulic thermal management module (10) for cooling circuit (5) of electric vehicle (3) comprising a first hydraulic pump (20) and a second hydraulic pump (21), ten interfaces (A, B1, B2, D, E, F, G, H, I, K) forming fluid communication channels; wherein:
- a first interface (H) is connected in fluid communication to an entry (20a) of the first hydraulic pump (20), an exit (20b) of the first hydraulic pump (20) is connected in fluid communication to a second interface (K);
- a third interface (I) is connected in fluid communication to an entry (21a) of the second hydraulic pump (21), an exit (21b) of the second hydraulic pump (21) is connected in fluid communication to a fourth interface (F); and wherein:
- a fifth interface (A), a sixth interface (B1), a seventh interface (B2), an eighth interface (D), a ninth interface (E), a tenth interface (G) further being defined by the ten interfaces (A, B1, B2, D, E, F, G, H, I, K);
- at least the fifth interface (A), the seventh interface (B 2), the eighth interface (D), the ninth interface (E) and the tenth interface (G) being individually operable in opening and closing;
the hydraulic thermal management module allowing four control configurations, in which:
- in a first piloting configuration (P 1):
- the fifth interface (A), the seventh interface (B2) and the eighth interface (D) are open;
- the ninth interface (E) and the tenth interface (G) are closed;
- the fifth interface (A) is in fluid communication with the entry (21 a) of the second hydraulic pump (21);
- the sixth interface (B 1) is connected in fluid communication to the seventh interface (B 2);
- the eighth interface (D) is also connected in fluid communication to the entry (20 a) of the first hydraulic pump (20);
- in a second piloting configuration (P2):
- the eighth interface (D) is open;
- the fifth interface (A), the seventh interface (B2) are closed, the ninth interface (E) and the tenth interface (G) are closed;
- the sixth interface (B 1) is connected in fluid communication to the entry (21 a) of the second hydraulic pump (21);
- the eighth interface (D) is connected in fluid communication to the entry (20 a) of the first hydraulic pump (20);
- in a third piloting configuration (P3):
- the fifth interface (A), the seventh interface (B2) are closed, the ninth interface (E) and the tenth interface (G) are open;
- the eighth interface (D) is closed;
- the fifth interface (A) is open and in fluid communication with the entry (21 a) of the second hydraulic pump (21);
- the sixth interface (B 1) is connected in fluid communication to the seventh interface (B 2);
- the ninth interface (E) is in fluid communication with the tenth interface (G);
- in a fourth piloting configuration (P4):
- the ninth interface (E) and the tenth interface (G) are open;
- the fifth interface (A), the seventh interface (B2) and the eighth interface (D) are closed;
- the sixth interface (B 1) is connected in fluid communication to the entry (21 a) of the second hydraulic pump (21);
- the ninth interface (E) is in fluid communication with the tenth interface (G).

2. The hydraulic thermal management module (10) according to claim 1, wherein the first interface (H), the second interface (K), the third interface (I), the fourth interface (F) and the sixth interface (B 1) are all open in each of the first, second, third and fourth control configurations (P 1, P 2, P 3, P 4).

3. Hydraulic thermal management module (10) according to any one of claims 1 or 2, **characterised in that** the fifth interface (A) is connected in fluid communication to an eleventh interface (J).

4. Cooling circuit (5) of an electric vehicle (3), comprising a hydraulic thermal management module (10) according to any one of claims 1 to 3.

5. The cooling circuit (5) of an electric vehicle (3) according to claim 4, wherein:
- the first interface (H), the second interface (K), the eighth interface (D), the ninth interface (E), the tenth interface (G) and the first hydraulic pump (20) belong to a first cooling sub-circuit of said cooling circuit (5);
- the third interface (I), the fourth interface (F), the fifth interface (A), the sixth interface (B 1), the seventh interface (B 2) and the second hydraulic pump (21) belong to a second sub-circuit for cooling said cooling circuit (5).

6. The method for using the cooling circuit (5) of an electric vehicle (3) according to claim 5, wherein glycol water is used in the first cooling subcircuit of said cooling circuit (5), and a dielectric liquid or glycol water is used in the second cooling subcircuit of said cooling circuit (5).

7. Electric vehicle (3) comprising a hydraulic thermal management module (10) according to any one of claims 1 to 3 or a cooling circuit (5) having a hydraulic thermal management module (10) according to any one of claims 1 to 3.
